Europäisches Patentamt

European Patent Office

Office européen des brevets

(11) Veröffentlichungsnummer: **0 230 577 B1**

# EUROPÄISCHE PATENTSCHRIFT

(45) Veröffentlichungstag der Patentschrift: **20.02.91**

(21) Anmeldenummer: **86116895.3**

(22) Anmeldetag: **04.12.86**

(51) Int. Cl.⁵: **B60C 9/18**, B60C 11/01, B60C 11/11

(54) Fahrzeugluftreifen.

(30) Priorität: **24.01.86 DE 3602102**

(43) Veröffentlichungstag der Anmeldung:
**05.08.87 Patentblatt 87/32**

(45) Bekanntmachung des Hinweises auf die
Patenterteilung:
**20.02.91 Patentblatt 91/08**

(84) Benannte Vertragsstaaten:
**AT BE CH DE ES FR GB GR IT LI LU NL SE**

(56) Entgegenhaltungen:
**EP-A- 0 073 966**
**EP-A- 0 122 530**
**FR-A- 2 303 675**

(73) Patentinhaber: **Continental Aktiengesellschaft**
**Königsworther Platz 1**
**D-3000 Hannover 1(DE)**

(72) Erfinder: **Rohde, Dieter**
**Windmühlenstrasse 4**
**D-3016 Lehrte(DE)**

EP 0 230 577 B1

Rank Xerox (UK) Business Services

## Beschreibung

Die Erfindung betrifft einen Fahrzeugluftreifen nach der Gürtelbauweise, also solche Luftreifen, die mit einem zugfesten, seitenstabilisierenden Gürtel versehen sind. Die Erfindung bezieht sich außerdem auf solche Laufflächengestaltungen, die neben Blockreihen in der Laufflächenmittelpartie auch am Laufflächenrand eine Blockreihe aufweisen.

Es ist bereits bekannt, zu beiden Seiten der seitlichen Blockreihen im Schulterbereich des Reifens etwa zylindrische Flächen vorzusehen, die sich somit zu beiden Seiten an den aktiven Teil des Laufstreifens bzw. der Lauffläche anschließen. Bei diesen bekannten Reifen sind die Laufflächenprofilierungen so ausgeführt, daß die seitlich außen frei auslaufenden Nuten der Laufflächenprofilierung nur über eine erhebliche Stufe in die vorerwähnten, seitlich angeordneten zylindrischen Flächen übergehen. Diese Ausbildung der Laufflächenränder führt zu besonderen Verformungen und Belastungen im Bereich der Reifenschulter.

Ein Reifen gemäß dem Oberbegriff des Anspruchs 1 ist 2.B. aus der EP-A-0073966 bekannt.

Der Erfindung liegt im wesentlichen die Aufgabe zugrunde, die eingangs erwähnten Reifen so auszubilden, daß sich eine dynamisch günstig beanspruchbare Schulterpartie des Reifens ergibt und zugleich eine breite Aufstandsfläche bei weichem Untergrund unterhalb der eigentlichen Lauffläche ergibt, die bei hartem Untergrund mit diesem in Verbindung steht.

Diese Aufgabe wird bei einem gattungsgemäßen Reifen erfindungsgemäß dadurch gelöst, daß die umlaufenden Flächen in etwa zylindrisch sind und daß die seitlichen Ränder des Gürtels von diesen zylindrischen Flächen umschlossen sind.

Der Grund der Profilnuten liegt somit zumindest im Bereich der Laufflächenränder auf einer Höhe mit den zu beiden Seiten der Lauffläche angeordneten, etwa zylindrischen Seitenflächen. Dadurch werden Kerbwirkungen ausgeschaltet, und die dynamische Belastung der Reifenschulter wird dadurch vermindert. Dabei hat der Gürtel eine solche Breite, daß seine Ränder sich unterhalb der vorerwähnten zylindrischen Flächen befinden. Dadurch wird ein günstiger Einfluß auf die dynamische Belastung im Bereich der Laufflächenränder ausgeübt; die Gürtelränder führen gewissermaßen zu einer Beruhigung der Laufstreifenrandzone.

In der Zeichnung ist ein Ausführungsbeispiel dargestellt. Es zeigen:

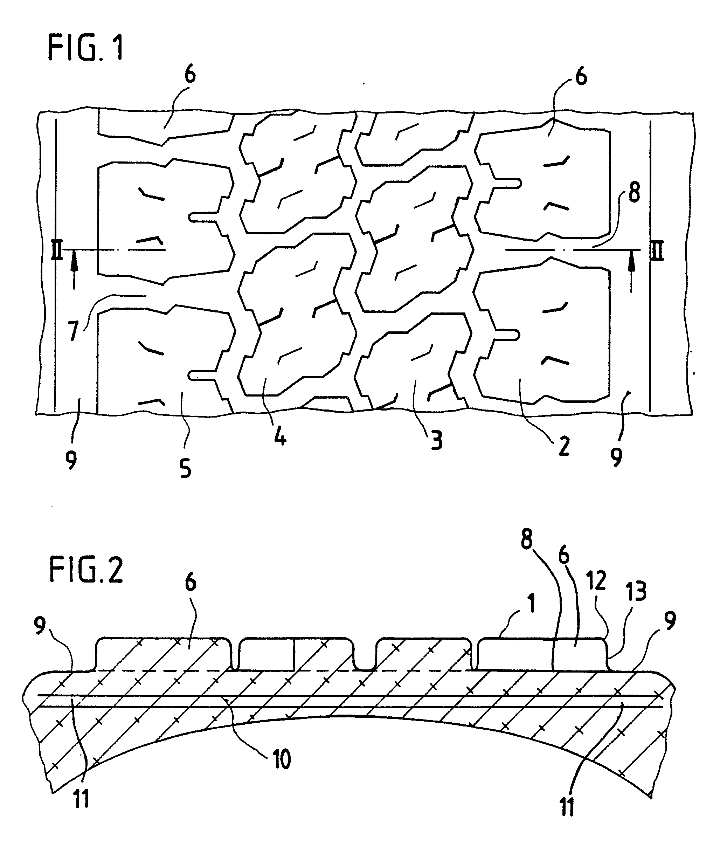

Fig. 1     eine Teildraufsicht auf die Laufstreifenzone eines vorzugsweise für Nutzfahrzeuge bestimmten Fahrzeugluftreifens, der insbesondere für eine Antriebsachse verwendet werden soll, und

Fig. 2     einen radialen Schnitt durch die Zenitpartie des Reifens gemäß Fig. 1.

Die Lauffläche 1 des Reifens wird von vier Blockreihen 2, 3, 4 und 5 gebildet. Die zugehörigen Blöcke 6 sind durch querverlaufende Nuten 7 voneinander getrennt, die bei den Blockreihen 2 und 5 seitlich frei auslaufen. Der Grund dieser Nuten 7 ist mit 8 bezeichnet.

Zu beiden Seiten der Blockreihen 2 und 5 befinden sich umlaufende, zylindrische Flächen 9, die stufenlos in den Grund 8 der Nuten 7 übergehen. Zugleich und zur weiteren Beruhigung der Laufflächenränder ist der zugfeste Gürtel 10 des Reifens so ausgeführt, daß dessen Ränder 11 von der zylindrischen Fläche 9 umschlossen sind.

Die seitlichen Kanten der Blöcke 6 sind bei 12 abgerundet. Ihre seitlich außen gelegenen Flächen 13 sind so gestaltet, daß sie im wesentlichen senkrecht auf den seitlichen Flächen 9 stehen.

## Ansprüche

1. Fahrzeugluftreifen, vorzugsweise für Antriebsachsen von Lastfahrzeugen, mit einem zugfesten Gürtel (10), mit zumindest im Bereich der Laufflächenränder befindlichen umlaufenden Blockreihen (2,5), deren querverlaufende Nuten (7) seitlich frei auslaufen, und mit zu beiden Seiten der Lauffläche (1) seitlich der beiden außen gelegenen Blockreihen (2,5) umlaufenden Flächen (9), wobei der Grund (8) der Nuten (7) stufenlos in die umlaufenden Flächen (9) übergeht, dadurch gekennzeichnet, daß die umlaufenden Flächen (9) in etwa zylindrisch sind und daß die seitlichen Ränder (11) des Gürtels (10) von diesen zylindrischen Flächen (9) umschlossen sind.

2. Reifen nach Anspruch 1, dadurch gekennzeichnet, daß die abgerundeten, seitlich außen gelegenen Kanten (12) der die Laufflächenränder bildenden Blöcke (6) in steile Seitenflächen (13) übergehen, die praktisch senkrecht in bezug auf die zylindrischen Flächen (9) angeordnet sind.

## Claims

1. Pneumatic vehicle tyre, preferably for drive shafts of heavy goods vehicles, having a substantially inextensible belt (10), circumferential rows of blocks (2, 5) which are situated at least in the region of the tread surface edges, and the transversely extending grooves (7) of which blocks extend laterally and freely, and faces (9) which extend laterally of the two externally situated rows of blocks 2, 5) on each side of the tread surface (1), the base (8) of the grooves (7) extending steplessly into the circumferential faces (9), characterised in that the circumferential faces (9) are substantially cylindrical, and in that the lateral edges (11) of the belt (10) are surrounded by these cylindrical faces (9).

2. Tyre according to claim 1, characterised in that the rounded, laterally and externally situated edges (12) of the blocks (6), which form the tread surface edges, extend into steep lateral faces (13), which are disposed virtually vertically relative to the cylindrical faces (9).

**Revendications**

1. Pneumatique pour véhicules, de préférence pour des essieux moteurs de camions, avec une ceinture résistante à la traction (10), avec des rangées de blocs (2, 5) entourantes qui se trouvent au moins dans la région des bords de la face de roulement et dont les rainures transversales (7) débouchent librement sur les côtés, et avec des faces (9) entourant latéralement, des deux côtés de la face de roulement (1), les deux rangées de blocs (2, 5) situées à l'extérieur, le fond (8) des rainures (7) se poursuivant sans gradin dans les faces entourantes (9), caractérisé en ce que les faces entourantes (9) sont approximativement cylindriques, et en ce que les bords latéraux (11) de la ceinture (10) sont entourés par ces faces cylindriques (9).

2. Pneumatique selon la revendication 1, caractérisé en ce que les arêtes arrondies (12), situées latéralement à l'extérieur, des blocs (6) qui constituent les bords de la face de roulement, se poursuivent par des faces latérales (13) à forte pente, qui sont disposées quasiment verticalement par rapport aux faces cylindriques (9).

FIG.1

FIG.2